# EUROPÄISCHE PATENTSCHRIFT

(11) **EP 1 059 470 B1**
(45) Veröffentlichungstag und Bekanntmachung des Hinweises auf die Patenterteilung: **14.11.2001**
(21) Anmeldenummer: 99110702.0
(22) Anmeldetag: 02.06.1999
(51) Int. Cl.: F16H 57/02

(54) **Getriebegehäuse mit in Wälzlagern gelagerten Getriebewellen für Wechselgetriebe von Kraftfahrzeugen**
Gear housing with transmission shafts supported by bearings for speed-change gearing in a vehicle
Carter de boîte de vitesse avec palier de roulement pour arbre de transmission dans une transmission de changement de vitesse d'un véhicule

(43) Veröffentlichungstag der Anmeldung: 13.12.2000
(73) Patentinhaber: Ford Global Technologies, Inc., A subsidiary of Ford Motor Company, Dearborn, Michigan 48126 (US)
(72) Erfinder: Nett, Hans Peter, 53518 Adenau (DE); Kreuer, Manfred, 50129 Bergheim (DE)
(74) Vertreter: Messulam, Alec Moses

(56) Entgegenhaltungen:
- EP-A- 0 126 695
- DE-A- 3 004 603
- DE-A- 3 805 707
- FR-A- 2 560 347
- PATENT ABSTRACTS OF JAPAN vol. 1998, no. 05, 30. April 1998 (1998-04-30) & JP 10 009259 A (NIPPON SEIKO KK), 13. Januar 1998 (1998-01-13)

## Beschreibung

Die Erfindung bezieht sich auf ein Getriebegehäuse mit in Wälzlagern gelagerten Getriebewellen, insbesondere für Wechselgetriebe von Kraftfahrzeugen der im Oberbegriff des Patentanspruches 1 erläuterten Art.

Aus gattungsgemäßen der EP 0 126 695 A ist ein Getriebegehäuse mit in Wälzlagern gelagerten Getriebewellen bekannt, wobei die Wälzlager in mit einem Getriebegehäuse verbundenen Lagerdeckeln oder Lagerschildern aufgenommen sind, die als ein- oder mehrlagige tiefgezogene Blechpreßteile hergestellt sind. Diese Blechpreßteile weisen Lagersitze für die Wälzlager, Durchtrittsöffnungen für die Getriebewellen und Aufnahmen für deren Wellendichtringe auf.

Obwohl mit dem bekannten Getriebegehäuse bereits eine gewichtsmindernde Bauweise vorgeschlagen wird, weist sie den Nachteil auf, daß in den entsprechenden Lagersitzen komplette Wälzlager angeordnet werden müssen, die infolge ihrer Außen- bzw. Innenlaufringe das Gewicht der Gesamtkonstruktion erhöhen.

Aus der FR 2 291 054 A ist ein Getriebegehäuse bekannt, bei dem die Baulänge eines mehrgängigen Vorgelege-Wechselgetriebes einerseits durch die Anordnung von zwei Vorgelegewellen und durch nach innen Verlagern von Wellenlagerungen stark verringert wurde.

Eine Verringerung der Baulänge eines Vorgelege-Wechselgetriebes wird durch den bei Fahrzeugen mit Frontantrieb stets beengten Einbauraum im Motorraum zwischen den lenkbaren Vorderrädern angestrebt und wird besonders wichtig, wenn z.B. von einem 4- oder 5-Gang-Wechselgetriebe auf ein 6-Gang umgeschwenkt werden soll.

Die Aufgabe der Erfindung ist es, ein Getriebegehäuse mit in Wälzlagern gelagerten Getriebewellen, insbesondere für Wechselgetriebe von Kraftfahrzeugen, der im Oberbegriff des Patentanspruches erläuterten Art derart zu verbessern, daß einerseits eine weitere Gewichtseinsparungen ohne Beeinträchtigung der Funktion, insbesondere der Lageranordnungen erzielt wird und andererseits eine Verringerung der Baulänge des Wechselgetriebes unter Beibehaltung der Getriebearchitektur mit nur eine Vorgelegewelle ermöglicht wird.

Gemäß der Erfindung wird diese Aufgabe gelöst, indem ein Getriebegehäuse mit in Wälzlagern gelagerten Getriebewellen, insbesondere für Wechselgetriebe von Kraftfahrzeugen, der im Oberbegriff des Patentanspruches 1 erläuterten Art, die im Kennzeichenteil des Patentanspruches 1 aufgezeigten Merkmale aufweist.

In den weiteren Patentansprüchen sind zweckmäßige Einzelheiten der Erfindung erläutert.

Die Erfindung wird anhand eines in der Zeichnung gezeigten Ausführungsbeispieles näher erläutert, Es zeigt:
- Fig. 1: Einen Teilschnitt durch ein Getriebegehäuse mit in Wälzlagern gelagerten Getriebewellen, insbesondere für ein Wechselgetriebe von Kraftfahrzeugen gemäß der Erfindung;
- Fig. 2: einen Teilschnitt durch den Bereich im Kreis II in Fig. 1;
- Fig. 3: eine weitere Einzelheit der Erfindung und
- Fig. 4: eine schematische Darstellung der Lage der Getriebewellen mit angedeuteter Lage der Kupplungsbetätigung.

In der Figur ist ein Getriebegehäuse 1 in der heute im Großserienbau üblichen zweiteiligen Aluminiumgußausführung gezeigt, die im wesentlichen aus einem hauptsächlichen Getriebegehäuse 2 und einem hauptsächlichen Kupplungsgehäuse 3 besteht.

In dem Getriebegehäuse 2, 3 können mehrere parallel zueinander angeordnete Getriebewellen angeordnet sein, von denen hier in der Figur nur eine Eingangswelle 4 und eine Vorgelegewelle 5 gezeigt sind.

Auf den Getriebewellen 4 und 5 sind Zahnradpaare für die unterschiedlichen Gangstufen angeordnet, die jeweils aus einem miteinander ständig in Eingriff stehendem Losrad und einem entsprechenden Festrad gebildet sind und wobei zwischen jeweils zwei Losrädern eine Synchronisiereinheit angeordnet ist, über die die jeweiligen Losräder treibend mit ihrer entsprechenden Getriebewelle verbunden werden können.

Die Anordnung dieser Getriebebauteile ist herkömmlicher Art und wird daher im Zusammenhang mit der vorliegenden Erfindung nicht im einzelnen beschrieben.

Die Getriebewellen 4 und 5 sind gemäß der Erfindung in mit dem Getriebegehäuse 2/3 über entsprechende Befestigungsschrauben verbundenen Lagerdeckeln oder Lagerschildern 6 und 7 über entsprechende Wälzlager gelagert.

Der eine Lagerdeckel bzw. das eine Lagerschild 6 am einen Ende des Getriebegehäuses 2 ist als ein zweilagiges Blechpreßteil, bestehend aus einem Lagerstützteil 8 und einem Abschlußteil 9 gebildet und kann zur Aufnahme der eine Axialfixierung der Getriebewellen 4 und 5 bewirkenden Rillenkugellager 10 und 11 ausgebildet sein.

Die anderen Enden der Getriebewellen 4 und 5 sind über eine Längenänderung zulassende Nadel- oder Rollenlager 12 und 13 abgestützt, deren eine Lauffläche, Innenlauffläche 14 bzw. Außenlauffläche 15, unmittelbar von Teilen der Getriebewellen 4 und 5 gebildet werden.

Gemäß der Erfindung ist der Lagerdeckel oder das Lagerschild 7 an der anderen Seite des Getriebegehäuses 3 als ein Feintiefziehteil hergestellt, an dem hülsenförmige Büchsen 16 und zapfenförmige Töpfe 17 ausgebildet sind, die mit ihren entsprechenden Oberflächen unmittelbar die äußere Lauffläche 18 bzw. die innere Lauffläche 19 für das entsprechende Nadel- bzw. Rollenlager 12 und 13 bilden.

Durch die Ausbildung des vorderen Lagerschildes 7 als Feintiefziehteil werden Oberflächenqualitäten in den gezogenen Büchsen- oder Topfbereichen erreicht, die kaum einer Nachbearbeitung bedürfen, um als Lagerlauffläche herangezogen zu werden.

Im Bereich des Nadel- oder Rollenlagers 13 kann alternativ an Stelle eines Topfes 17 auch ein vom Lagerschild 7 nach innen vorspringender Zapfen vorgesehen werden, der ggf. mit einem äußeren Flanschteil durch Schweißen am Lagerschild 7 aus Blech befestigt ist.

Bei einem Wechselgetriebe für Kraftfahrzeuge, steht die Eingangs-Getriebewelle 4 in treibender Verbindung mit einer Reibscheibenkupplung, die als ganzes mit 20 bezeichnet ist. Die Einzelheiten einer solchen Reibscheibenkupplung sind hinlänglich bekannt und werden dementsprechend hier nicht im einzelnen erläutert.

Es wird lediglich darauf hingewiesen, daß eine solche Reibscheibenkupplung 20 Ausrückhebel 21 aufweist, die über ein Ausrücklager 22 von einer Betätigungseinrichtung 23 zum Ausrücken der Kupplung beaufschlagt werden kann.

Eine herkömmliche Betätigungseinrichtung zum Ausrücken der Kupplung besteht z.B. aus einer konzentrisch zur Eingangswelle angeordneten Ringzylinder/Ringkolben-Anordnung, die zu einer Verlängerung der Baulänge des Wechselgetriebes von ca. 25 - 30 mm beiträgt.

In besonders vorteilhafter Weise kann gemäß der Erfindung diese Betätigungseinrichtung in Form von z.B. drei am Umfang verteilten hydraulisch betätigten Kolben 23 bestehen, die in entsprechenden Zylindern 24 aufgenommen sind, die nach einem weiteren Merkmal der Erfindung gleichfalls als tiefgezogene Töpfe mit der entsprechend erforderlichen Oberflächenqualität im Lagerschild 7 gebildet sind. Damit kann der für die Kupplungsbetätigung erforderliche Bauraum auf der Eingangswelle wegfallen und die gewonnene Baulänge kann für die Räderanordnung genutzt werden.

Es wird noch darauf hingewiesen, daß auch das vordere Lagerschild 7 ggf. als zweilagiges Blechpreßteil ausgebildet werden kann, um z.B. eine entsprechende Aufnahme 25 für den Wellendichtring 26 für die Eingangswelle 4 bereitstellen zu können.

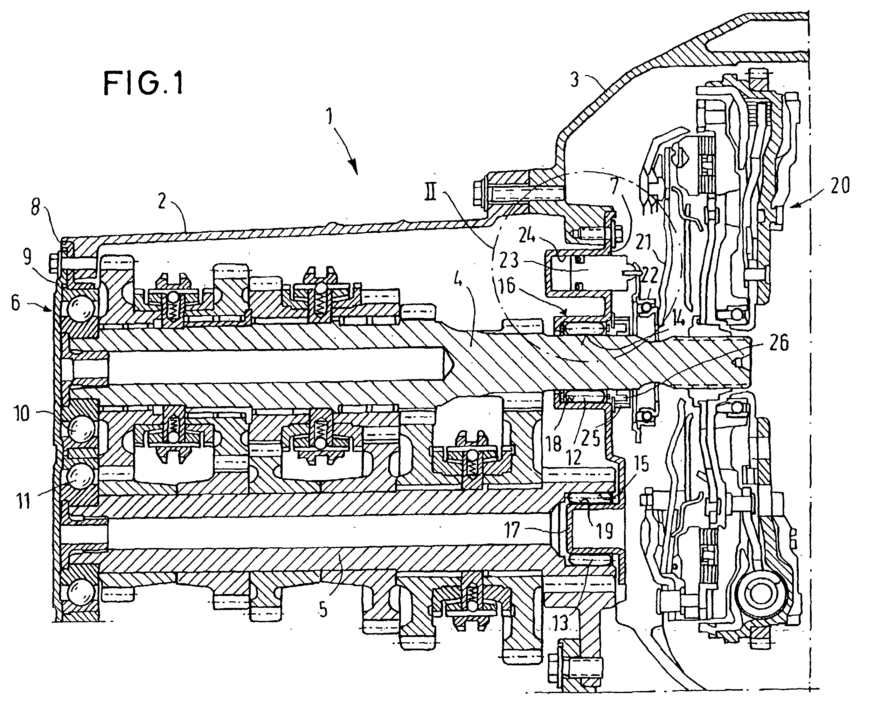

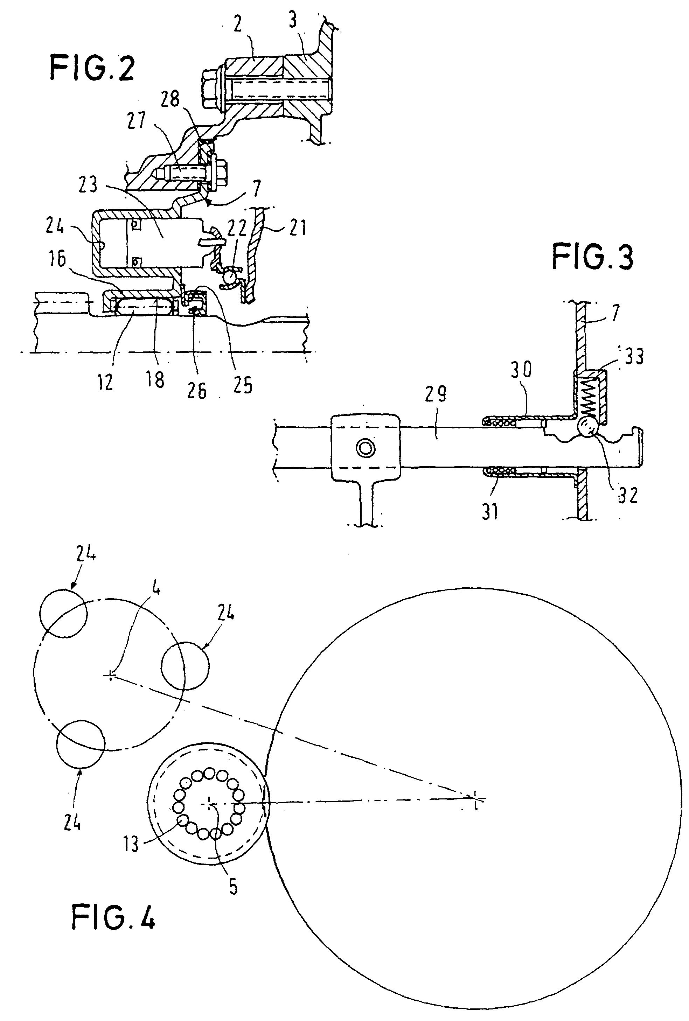

In Fig. 2 ist der Bereich im Kreis II in Fig. 1 vergrößert dargestellt. Die Befestigung des Lagerschildes 7 am Getriebegehäuse 2 mittels Schraubenbolzen 27 kann unter Einschaltung einer elastischen Zwischenlage 28 erfolgen, wodurch auf einfache Weise eine Körperschallentkopplung erreicht werden kann.

In Fig. 3 ist eine weitere erfindungsgemäße Einzelheit gezeigt. Die zur Lagerung einer axial verschiebbaren Schaltstange 29 erforderliche Führung kann in Form einer gezogenen Hülse 30 bereitgestellt werden, die z.B. ein Axial-Kugellager 31 aufnimmt. Eine erforderliche Feder/Kugel-Raste 32 kann in einer entsprechenden Einprägung 33 im Lagerschild 7 untergebracht werden.

In Fig. 4 ist die am Umfang verteilte Anordnung der Kolben/Zylinder 23/24 um die Eingangswelle 4 gezeigt, wodurch die für die Kupplungsbetätigung früher erforderliche Baulänge für die Baulänge z.B. eines 6-Gang-Getriebes genutzt werden kann.

Selbstverständlich können die beiden Lagerdeckel oder Lagerschilder 6 bzw. 7 in einer Ausführung auch als mehrlagige Blechpreßteile gemäß dem eingangs erwähnten Stand der Technik ausgebildet sein, d.h., die beiden miteinander verbundenen Blechpreßteile können geräusch- und schwingungsdämpfende Eigenschaften aufweisen.

## Patentansprüche

1. Getriebegehäuse mit in Wälzlagern gelagerten Getriebewellen, insbesondere für Wechselgetriebe von Kraftfahrzeugen, wobei die Wälzlager (10 und 11 bzw. 12 und 13) in mit dem Getriebegehäuse (2/3) verbundenen Lagerdeckeln oder Lagerschildern (6 und 7) aus ein- oder mehrlagigen Blechpreßteilen aufgenommen sind, die Lagersitze für die Wälzlager, Durchtrittsöffnungen für die Getriebewellen (4 und 5) und Aufnahmen für deren Wellendichtringe aufweisen,
**dadurch gekennzeichnet, daß**
- eines der Blechpreßteile als Feintiefziehteil hergestellt und mit hülsenförmigen Büchsen (16) und zapfenförmigen Töpfen (17) versehen ist, die unmittelbar äußere bzw. innere Laufflächen (18 bzw. 19) für mit den Getriebewellen (4 und 5) zusammenwirkende Nadel- oder Rollenlager (12 und 13) bilden.

2. Getriebegehäuse nach Anspruch 1,
**dadurch gekennzeichnet, daß**
- das eine Blechpreßteil (7) als Feintiefziehteil hergestellt und mit einer Anzahl von am Umfang zur Eingangswelle (4) verteilt angeordneten, tiefgezogenen Töpfen (24) versehen ist, die als Zylinder für Betätigungskolben (23) für eine Betätigung des Ausrücklagers (22) einer Reibscheibenkupplung (20) dienen.

3. Getriebegehäuse nach den Ansprüchen 1 und 2,
**dadurch gekennzeichnet, daß**
- die Blechpreßteile (6 und 7) als mehrlagige Blechpreßteile hergestellt sind, die derart miteinander verbunden sind, daß sie geräusch- und schwingungsdämpfende Eigenschaften aufweisen und Aufnahmen (25) für Wellendichtringe (26) bzw. Abschlußteile (9) bilden.

4. Getriebegehäuse nach den Ansprüchen 1 und 2,
**dadurch gekennzeichnet, daß**
- die Blechpreßteile (6 und 7) am Getriebegehäuse (2, 3) unter Einschaltung einer Zwischenlage (28) aus elastischem Material zur Körperschallentkopplung befestigt sind.

5. Getriebegehäuse nach den Ansprüchen 1 bis 4,
**dadurch gekennzeichnet, daß**
- im Lagerschild (7) eine Hülse (30) als Aufnahme der Lagerung (31) einer axial verschiebbaren Schaltstange (29) ausgebildet ist und eine erforderliche Feder/Kugel-Raste (32) in einer Einprägung (33) aufgenommen ist.

6. Getriebegehäuse nach Anspruch 1,
**dadurch gekennzeichnet, daß**
- an Stelle eines aus dem Lagerschild (7) tiefgezogenen Topfes (17) ein sich durch eine entsprechende Öffnung nach innen erstrebender Zapfen vorgesehen ist, der ggf. über einen äußeren Flansch durch Schweißen mit dem Lagerschild (7) verbunden ist.

## Claims

1. A gearbox casing having gear shafts mounted in rolling bearings, in particular for a motor vehicle gear change box, the rolling bearings (10 and 11 or 12 and 13) being accommodated in cap pieces or end plates (6 and 7), which consist of single- or multi-layer pressed sheet metal parts, are connected with the gearbox casing (2/3) and comprise bearing seats for the rolling bearings, passage openings for the gear shafts (4 and 5) and receptacles for the shaft sealing rings thereof,
**characterised in that**
- one of the pressed sheet metal parts takes the form of a thin deep-drawn part and is provided with sleeve-type bushes (16) and spigot-like cups (17), which directly form external or internal running surfaces (18 and 19 respectively) for needle or roller bearings (12 and 13) interacting with the gear shafts (4 and 5).

2. A gearbox casing according to claim 1,
**characterised in that**
- the one pressed sheet metal part (7) takes the form of a thin deep-drawn part and is provided with a number of deep-drawn cups (24) distributed circumferentially about the input shaft (4), which cups (24) serve as cylinders for actuating pistons (23) for actuating the clutch release bearing (22) of a friction disk clutch (20).

3. A gearbox casing according to claims 1 and 2,
**characterised in that**
- the pressed sheet metal parts (6 and 7) take the form of multi-layer pressed sheet metal parts, which are connected together in such a way that they exhibit noise- and vibration-reducing properties and form receptacles (25) for shaft sealing rings (26) or closing parts (9).

4. A gearbox casing according to claims 1 and 2,
**characterised in that**
- the pressed sheet metal parts (6 and 7) are attached to the gearbox casing (2, 3) with the interposition of a spacer (28) of resilient material for the decoupling of structure-borne noise.

5. A gearbox casing according to claims 1 to 4,
**characterised in that**
- a sleeve (30) is constructed in the bearing end plate (7) as a receptacle for the bearing system (31) of an axially displaceable gear-shift bar (20) and a necessary spring and ball catch is accommodated in a recess (33).

6. A gearbox casing according to claim 1,
**characterised in that**,
- instead of a cup (17) deep-drawn from the bearing end plate (7), a spigot is provided which extends inwards through a corresponding opening and is optionally connected to the bearing end plate (7) via an external flange by welding.

## Revendications

1. Carter de boîte avec des arbres de transmission montés sur roulements, notamment pour des boîtes de vitesses de véhicules automobiles, les roulements (10 et 11, 12 et 13) étant logés dans des chapeaux de palier ou flasques (6 et 7) assemblés au carter de boîte (2/3) et constitués de pièces façonnées en tôle en une ou plusieurs couches, qui présentent des sièges pour les roulements, des ouvertures de passage pour les arbres de transmission (4 et 5) et des logements pour leurs bagues d'étanchéité d'arbre,
**caractérisé en ce qu'**une des pièces façonnées en tôle est fabriquée par emboutissage profond fin et est pourvue de coussinets (16) en forme de douilles et de cuvettes (17) en forme de tourillons, qui forment directement des pistes de roulement respectivement extérieures et intérieures (18, 19) pour des roulements à aiguilles ou à rouleaux (12 et 13) coopérant avec les arbres de transmission (4 et 5).

2. Carter de boîte selon la revendication 1, **caractérisé en ce qu'**une (7) des pièces façonnées en tôle est fabriquée par emboutissage profond fin et est pourvue d'un certain nombre de cuvettes (24) réalisées par emboutissage profond, réparties sur la périphérie vers l'arbre primaire (4), qui servent de cylindres pour des pistons (23) d'actionnement de la butée de débrayage (22) d'un embrayage à disques de friction (20).

3. Carter de boîte selon les revendications 1 et 2, **caractérisé en ce que** les pièces façonnées en tôle (6 et 7) sont fabriquées sous forme de pièces façonnées en tôle en plusieurs couches, qui sont assemblées entre elles de telle sorte qu'elles présentent des propriétés d'amortissement du bruit et des vibrations et qu'elles forment des logements (25) pour des bagues d'étanchéité d'arbre (26) ou des éléments de terminaison (9).

4. Carter de boîte selon les revendications 1 et 2, **caractérisé en ce que** les pièces façonnées en tôle (6 et 7) sont fixées sur le carter de boîte (2, 3) avec intercalation d'une couche intermédiaire (28) en matériau élastique pour le découplage du bruit structurel.

5. Carter de boîte selon les revendications 1 à 4, **caractérisé en ce qu'**une douille (30) est formée dans le flasque (7) comme logement pour le palier de montage (31) d'une tringle de sélection (29) axialement coulissante, et un nécessaire cran d'arrêt à bille et ressort (32) est logé dans une région repoussée (33).

6. Carter de boîte selon la revendication 1, **caractérisé en ce qu'**au lieu d'une cuvette (17) emboutie profond à partir du flasque (7), il est prévu un tourillon qui s'étend vers l'intérieur par une ouverture correspondante, et qui est assemblé par soudage au flasque (7), éventuellement par l'intermédiaire d'une bride extérieure.
